# EUROPÄISCHE PATENTSCHRIFT

(11) **EP 2 327 136 B1**
(45) Veröffentlichungstag und Bekanntmachung des Hinweises auf die Patenterteilung: **17.08.2016**
(21) Anmeldenummer: 09743837.8
(22) Anmeldetag: 14.09.2009
(51) Int. Cl.: H02K 1/14

(54) **PERMANENTMAGNET-SYNCHRONMOTOR UND ELEKTRISCHE SERVOLENKUNG**
PERMANENT-MAGNET SYNCHRONOUS MOTOR AND ELECTRIC POWER-ASSISTED STEERING SYSTEM
MOTEUR SYNCHRONE À AIMANT PERMANENT ET SERVODIRECTION ÉLECTRIQUE

(30) Priorität: 15.09.2008 DE 102008042100
(43) Veröffentlichungstag der Anmeldung: 01.06.2011
(60) Teilanmeldung: 15198633.8
(73) Patentinhaber: Brose Fahrzeugteile GmbH & Co. Kommanditgesellschaft, Würzburg, 97076 Würzburg (DE)
(72) Erfinder: OMBACH, Grzegorz, 97209 Veitshöchheim (DE); JUNAK, Jacek, 97209 Veitshöchheim (DE); STEEGMUELLER, Horst, 97076 Würzburg (DE)
(74) Vertreter: Isarpatent
(86) Internationale Anmeldenummer: PCT/DE2009/001275
(87) Internationale Veröffentlichungsnummer: WO 2010/028639

(56) Entgegenhaltungen:
- EP-A- 1 542 335
- EP-A- 1 770 847
- DE-A1- 19 842 948
- JP-A- 2007 151 232
- NICOLA BIANCHI ET AL: "Design Techniques for Reducing the Cogging Torque in Surface-Mounted PM Motors", IEEE TRANSACTIONS ON INDUSTRY APPLICATIONS, IEEE SERVICE CENTER, PISCATAWAY, NJ, US, vol. 38, no. 5, 1 September 2002 (2002-09-01), XP011073515, ISSN: 0093-9994

## Beschreibung

Die vorliegende Erfindung betrifft einen Permanentmagnet-Synchronmotor, insbesondere elektrische Dreiphasenmotor. Die vorliegende Erfindung betrifft weiterhin eine elektrische Servolenkung eines Kraftfahrzeugs.

Derartige Permanentmagnet-Synchronmotoren werden beispielsweise in Antriebseinrichtungen von Kraftfahrzeugen, insbesondere in Servolenkungssystemen und dergleichen, eingesetzt.

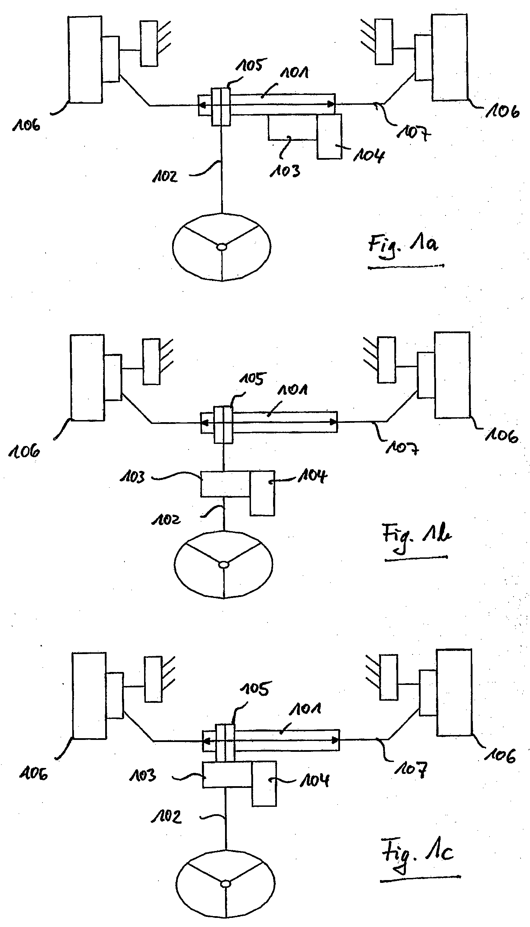

Allgemein bekannte Servolenkungssysteme sind in den Fig. 1a-c beispielhaft dargestellt. Fig. 1a zeigt ein Servolenkungssystem eines Kraftfahrzeugs mit Rädern 106, die über eine Spurstange 107 lenkbar verbunden sind. Die Spurstange 107 steht mit einem Lenkgetriebe 101 in Zusammenwirkung, welches hier eine Zahnstange (nur symbolisch durch einen Doppelpfeil angedeutet) aufweist, die mit einem Ritzel 105 verbunden ist. Das Ritzel 105 ist mit einem Lenkrad über eine Lenkwelle 102 drehbar gekoppelt. Ein Lenkantrieb 103 in Ausführung eines elektrischen Dreiphasenmotors mit einer Steuereinheit 104 ist an dem Lenkgetriebe 101 angebracht und dient als Unterstützung bei Lenkvorgängen, indem er mit der Zahnstange zusammenwirkt. Fig. 1b zeigt ein Servolenkungssystem ähnlich zu Fig. 1a, wobei hier der Lenkantrieb 103 mit der Lenkwelle 102 unterstützend zusammenwirkt. Der Lenkantrieb 103 kann hierzu an einer Lenksäule angebracht sein. In Fig. lc ist ebenfalls ein zu Fig. 1a und 1b ähnliches Servolenkungssystem gezeigt. In dieser Konfiguration ist der Lenkantrieb 103 in Zusammenwirkung mit dem Ritzel 105 gezeigt, wobei er auch an dem Lenkgetriebe 101 angeordnet sein kann.

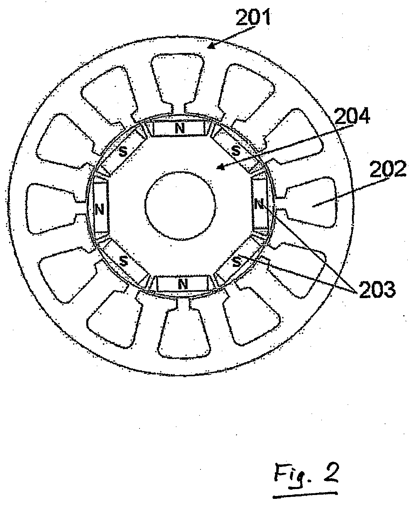

Ein derzeitig als Lenkantrieb 103 verwendeter Permanentmagnet-Synchronmotor ist in Fig. 2 in einer schematischen Draufsicht illustriert und weist Folgendes auf: Einen Stator 201 mit Nuten 202, in denen Wicklungen (nicht gezeigt) angeordnet sind; und einen Rotor 204 mit Permanentmagneten 203, die hier in Axialrichtung des Motors innerhalb des Rotors 204 an dessen Umfang angeordnet sind. Der Rotor 204 befindet sich innerhalb des Stators 201.

Es gibt zwei Hauptgesichtspunkte, die ein solcher Motor erfüllen muss: 1) Leistungsfähigkeit und 2) Sicherheit. In Bezug auf die Leistungsfähigkeit sind Parameter wie zum Beispiel Leistungsdichte, maximales Ausgangsdrehmoment, Drehmomentschwankung bzw. -welligkeit und Rastmoment bzw. pulsierendes Moment von Bedeutung. Für die Sicherheit sind die folgenden Parameter von großer Wichtigkeit: maximales Bremsmoment, Kurzschlussfähigkeit, Fehlertoleranz und Einfachheit.

EP 1 770 847 A beschreibt einen Rotationsmotor mit Dauermagnet. Der Motor weist einen Stator mit Zähnen auf, welche an ihren zu einem Rotor weisenden Seiten Verbindungsabschnitte mit unterschiedlichen Umfangslängen aufweisen. In den Verbindungsabschnitten sind Durchgangslöcher mit unterschiedlichen Umfangslängen eingeformt, welche sich in unterschiedlichen axialen Längen von der Mitte der Verbindungsabschnitte nach beiden Seiten in axialer Richtung erstrecken.

DE 198 42 948 A1 beschreibt ein Herstellverfahren eines Blechpakets eines Stators eines Elektromotors, mit mindestens einem durch aufeinander geschichtete Blechlamellen gebildeten Blechpaket eines Stators, aus mechanischen einzelnen Polen und in Umfangsrichtung des Stators zusammenhängenden Polen bestehenden Blechlamellen, mit mindestens einem Polschaft und wenigstens einem einen Rotor zugewandten Polschuh, Eindrückungen der Blechlamellen derart, dass die entgegengesetzten Seiten der Blechlamellen Vorsprünge aufweisen und dadurch die Blechlamellen durch Ineinandergreifen ihrer Eindrücke und Vorsprünge als Blechpaket des Stators bilden, Wicklungen der mechanischen Pole des Blechpakets, Stege zwischen den Polen, die die zusammenhängenden mechanischen Pole in Umfangsrichtung verbinden. Die axiale Zusammensetzung weist einen vorgebbaren Wechsel von Polen mit Verbindungssteg und Polen ohne Verbindungssteg auf. Dabei sind fünf Lamellen mit Polen ohne Verbindungssteg zwischen jeweils einer Lamelle mit Polen mit Verbindungssteg angeordnet.

EP 1 542 335 A illustriert einen Rotor für eine sich drehende elektrische Maschine. Der Rotor weist eine Welle und eine Vielzahl von Rotorkernen auf, die auf der Welle befestigt und axial geteilt sind. Die Rotorkerne haben äußere periphere Flächen mit einem kreisförmigen Querschnitt. Permanentmagneten erstrecken sich durch die Rotorkerne und sind in gleichen Umfangsintervallen angeordnet. Lücken erstrecken sich axial durch die Rotorkerne und sind zwischen den äußeren peripheren Flächen und den Permanentmagneten gebildet. Die Lücken zweier benachbarter Rotorkerne sind umfangsmäßig an unterschiedlichen Positionen angeordnet.

JP 2007 151232 A beschreibt einen Permanentmagnetmotor und eine Servolenkung mit einem solchen Motor. Ein lamellenförmiger Stator weist Statorzähne auf, die z.T. an ihren zum Rotor weisenden Spitzen verbunden und unverbunden sind. Die Lamellen sind gemischt übereinander geschichtet, wobei eine Schichtung aus einem Muster 2 verbundene / 10 unverbundene / 3 verbundene / 10 unverbundene / 2 verbundene besteht. Ein Rotor ist mit zwei zueinander um eine Rotorachse verdreht angeordneten Rotorteilen versehen, wobei jedes Rotorteil den unverbundenen Lamellen zugeordnet ist.

Die Druckschrift NICOLA BIANCHI ET AL: "Design Techniques for Reducing the Cogging Torque in Surface-Mounted PM Motors", IEEE TRANSACTIONS ON INDUSTRY APPLICATIONS, IEEE SERVICE CENTER, PISCATAWAY, NJ, US, Bd. 38, Nr. 5, 1. September 2002 (2002-09-01), XP011073515, ISSN: 0093-9994, beschreibt verschiedene klassische und innovative Techniken zur Konstruktion oberflächenmontierter Permanentmagnet-Motoren zur Reduzierung eines Rastmomentes mit jeweiligem theoretischem Hintergrund sowie Grundlagen zur Drehmomentenwelligkeit bei Permanentmagnet-Rotoren. Dazu werden ein einfaches Originalmodell des Rastmomentmechanismus und eine Fourieranalyse eingeführt. Als Ergebnis wird hervorgehoben, dass einige Techniken nicht immer verwendbar sind, und dass einige von ihnen abzulehnen sind, wenn sie nicht korrekt verwendet werden. Zudem werden Auswirkungen von Rastmomentelimination auf EMK diskutiert. Eine Festlegung eines Versatzwinkels bei mehreren Rotorpaketen zur Verringerung einer Drehmomentenwelligkeit wird angesprochen.

Die erhöhten Anforderungen an die Einsatzbedingungen in einem Kraftfahrzeug insbesondere in Bezug auf ein möglichst geringes Bauvolumen, niedriges Gewicht, geringe Anzahl der verwendeten Einzelteile und gleichzeitig hohem Wirkungsgrad, und die oben genannten Parameter resultieren in der stets vorhandenen Forderung, einen entsprechend verbesserten Permanentmagnet-Synchronmotor bereitzustellen.

Vor diesem Hintergrund liegt der vorliegenden Erfindung daher die Aufgabe zugrunde, einen verbesserten Permanent-Synchronmotor mit geringem Rastmoment und geringem Bremsmoment verbunden mit einer hohen Leistungsfähigkeit und gleichzeitig geringer Momentwelligkeit zu schaffen anzugeben.

Erfindungsgemäß wird diese Aufgabe durch einen Permanentmagnet-Synchronmotor mit den Merkmalen des Patentanspruchs 1 und/oder durch eine elektrische Servolenkung mit den Merkmalen des Patentanspruchs 6 gelöst.

Ein solcher Permanentmagnet-Synchronmotors weist damit die Vorteile eines sehr geringen Rastmomentes verbunden mit einer hohen Leistungsfähigkeit und gleichzeitig niedriger Momentwelligkeit auf.

Ein weiterer Vorteil besteht darin, dass der erfindungsgemäße Permanentmagnet-Synchronmotor ein im Vergleich zu herkömmlichen Permanentmagnet-Synchronmotoren niedrigeres Bremsmoment aufweist, welches bis zu 50% geringer sein kann.

Gleichzeitig kann damit auch ein Startrelais entfallen, da die Bremsmomente geringer ausfallen.

Der beschriebene Permanentmagnet-Synchronmotor ist bevorzugt für die Antriebseinrichtung einer Kraftfahrzeug-Servolenkung geeignet. Denkbar sind aber auch andere Anwendungen bei anderen Antriebseinrichtungen.

Vorteilhafte Ausgestaltungen und Weiterbildungen der Erfindung ergeben sich aus den Unteransprüchen sowie aus der Beschreibung in Zusammenschau mit den Figuren der Zeichnung.

In weiterer bevorzugter Ausführung ist zwischen den Wicklungen in den Statornuten jeweils zumindest eine Isolierung vorgesehen. Dadurch wird eine Wahrscheinlichkeit von Isolationsfehlern geringer.

Die Wicklungen können in einer Dreiphasen-Sternschaltung oder in einer Dreiphasen-Dreieckschaltung angeordnet sein. Dadurch wird im Fall fehlerhafter Isolation im Vergleich zu herkömmlichen Motoren ein sehr geringes Bremsmoment erzielt. Die Dreieckschaltung bietet auch den Vorteil, dass Verbindungsstellen im Vergleich zur Sternschaltung, welche für herkömmliche Permanentmagnet-Synchronmotoren mit Startrelais erforderlich sind, verringert sind.

Der Rotor kann unterschiedliche mit Permanentmagneten in Taschen an seinem Umfang, umfänglich auf seiner Oberfläche oder mit Ringmagneten ausgebildet sein.

Eine Anzahl n von Rotorpaketens von einer aktiven axialen Länge Lstk des Permanentmagnet-Synchronmotors wie folgt abhängigsein: n = 1 oder 2 wenn Lstk ≤ 40mm; n = 2 oder 3 wenn 40 ≤ Lstk ≤ 60mm; n = 3 oder 4 wenn 60 ≤ Lstk ≤ 80mm; und n = 4 wenn 80 ≤ Lstk ≤ 130mm. Unter der aktiven axialen Länge Lstk ist die axiale Länge des Stators mit Rotor zu verstehen.

Es ist zweckmäßig, dass der Versatzwinkel γ kleiner oder gleich der Hälfte einer Anzahl von Statornuten ist.

In bevorzugten Ausführungen weist der Permanentmagnet-Synchronmotor zwölf Statornuten und acht Polpaare, zwölf Statornuten und zehn Polpaare oder zwölf Statornuten und vierzehn Polpaare auf.

Im Vergleich zu einem herkömmlichen Permanentmagnet-Synchronmotor weist der erfindungsgemäße Permanentmagnet-Synchronmotor u.a. auch die folgenden Vorteile auf:
- Erhöhte Leistungsfähigkeit von ca. 10%;
- um ca. 50% niedrigeres Bremsmoment;
- erhöhte Motorinduktivität für kleine Ströme;
- reduziertes Rastmoment;
- reduzierte Momentenwelligkeit;
- kein Relais erforderlich;
- Dreieckschaltung kann verwendet werden;
- Ausgezeichnete Wicklungs-/Phasenisolation;
- einfachere Statorkonstruktion;
- einfachere Rotorkonstruktion.

Die obigen Ausgestaltungen und Weiterbildungen der Erfindung lassen sich auf beliebige Art und Weise miteinander kombinieren.

Die vorliegende Erfindung wird nachfolgend anhand der in den schematischen Figuren der Zeichnung angegebenen Ausführungsbeispiele näher erläutert. Es zeigen dabei:
- Fig. 1a-c: schematische Darstellungen von Servolenkungssystemen mit Lenkantrieben in unterschiedlichen Einbaupositionen;
- Fig. 2: eine schematische Draufsicht auf einen Permanentmagnet-Synchronmotor;
- Fig. 3: eine schematische Draufsicht auf einen Stator eines Ausführungsbeispiels eines erfindungsgemäßen Permanentmagnet-Synchronmotors;
- Fig. 4: eine vergrößerte schematische Draufsicht auf einen Teilabschnitt von Statorzähnen des erfindungsgemäßen Permanentmagnet-Synchronmotors nach Fig. 3;
- Fig. 5: eine vergrößerte schematische Draufsicht auf einzelne Statorzähne des erfindungsgemäßen Permanentmagnet-Synchronmotors nach Fig. 3;
- Fig. 6: eine vergrößerte, schematische perspektivische Ansicht auf Statorsterne und Statorzähne des erfindungsgemäßen Permanentmagnet-Synchronmotors nach Fig. 3;
- Fig. 7-8: Schaltbilder von Wicklungen des erfindungsgemäßen Permanentmagnet-Synchronmotors nach Fig. 3;
- Fig. 9-11: schematische Draufsichten auf drei Ausführüngsbeispiele eines Rotors des erfindungsgemäßen Permanentmagnet-Synchronmotors nach Fig. 3;
- Fig. 12: eine schematische perspektivische Ansicht eines vierten Ausführungsbeispiels des Rotors des erfindungsgemäßen Permanentmagnet-Synchronmotors nach Fig. 3;
- Fig. 13: eine schematische Seitenansicht des vierten Ausführungsbeispiels des Rotors nach Fig. 12; und
- Fig. 14: eine grafische Darstellung eines Bremsmomentes über einer Drehzahl des erfindungsgemäßen Permanentmagnet-Synchronmotors nach Fig. 3 im Vergleich zu einem herkömmlichen PermanentmagnetSynchronmotor.

In den Figuren der Zeichnung sind gleiche und funktionsgleiche Elemente und Merkmale - sofern nichts Anderes ausgeführt ist - mit denselben Bezugszeichen versehen.

Servolenksysteme und Grundaufbau eines Permanentmagnet-Synchronmotors sind bereits oben mit Bezugnahme auf Fig. 1a bis c und Fig. 2 erläutert worden.

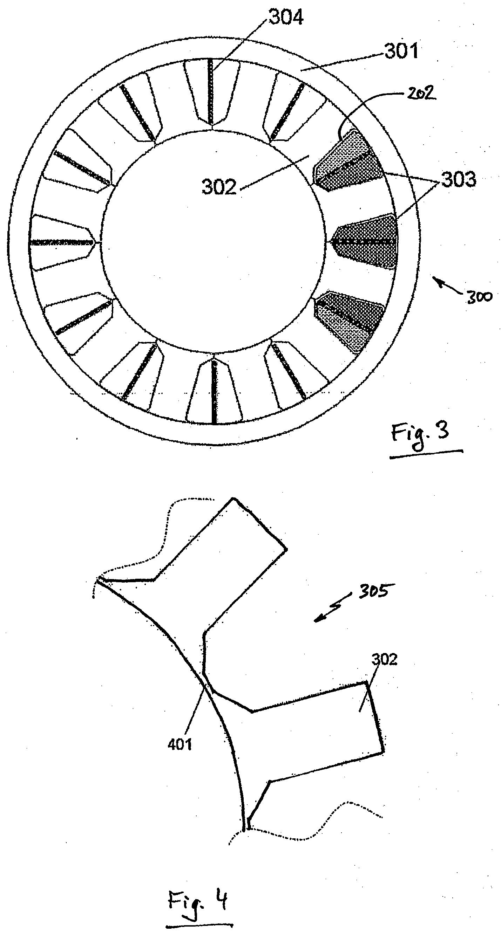

Fig. 3 zeigt eine schematische Draufsicht auf einen Stator 300 eines Ausführungsbeispiels eines erfindungsgemäßen Permanentmagnet-Synchronmotors mit einem Statorjoch 301, in welchem Statorzähne 302 am inneren Umfang des Statorjochs 301 umlaufend angeordnet sind. Zwischen den Statorzähnen 302 befinden sich Statornuten 202, in welchen Wicklungen 303 um die Statorzähne 302 angeordnet sind. Die Wicklungen 303 sind in den Statornuten 202 untereinander zusätzlich mit einer Isolierung 304 isoliert. Die zur Mitte des Statorjochs 301 hin weisenden Enden der Statorzähne 302 sind verbreitert, dass die Statornuten 202 radial innen von diesen Verbreiterungen und außen vom Statorjoch 301 umgeben sind.

In Fig. 4 ist eine vergrößerte schematische Draufsicht auf einen Teilabschnitt der Statorzähne 302 des erfindungsgemäßen Permanentmagnet-Synchronmotors nach Fig. 3 dargestellt. In diesem Beispiel sind die Statorzähne 302 als Lamellen ausgebildet, die in Axialrichtung des Stators 300 übereinandergeschichtet sind. Diese Lamellen können zumindest zwei unterschiedliche Formen aufweisen. Fig. 4 zeigt eine erste Form in Gestalt eines Statorsterns 305. Hierbei sind die verbreiterten Enden der Statorzähne 302 jeweils umlaufend über eine Verbindungsbrücke 401 verbunden.

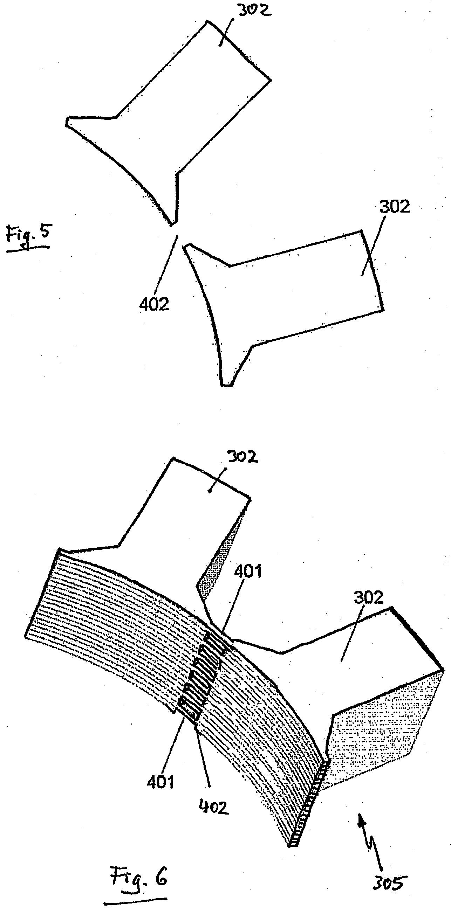

Eine zweite Form dieser Lamellen ist in Fig. 5 gezeigt, wobei die verbreiterten Enden der Statorzähne 302 nicht verbunden sind, sondern eine Unterbrechung 402 aufweisen. Sie sind somit Einzelzähne. In dem oben erwähnten geschichteten Aufbau in Axialrichtung sind diese Lamellen abwechselnd übereinander geschichtet angeordnet, wie Fig. 6 in einem Beispiel in perspektivischer Darstellung illustriert. Hierbei wechseln sich Verbindungsbrücken 401 und Unterbrechungen 402 ab. Auch weitere Anordnungen sind möglich, wie zum Beispiel zwei oder drei Lamellen mit Unterbrechungen 402 zwischen zwei Verbindungsbrücken 401. Weitere Kombinationen sind selbstverständlich denkbar.

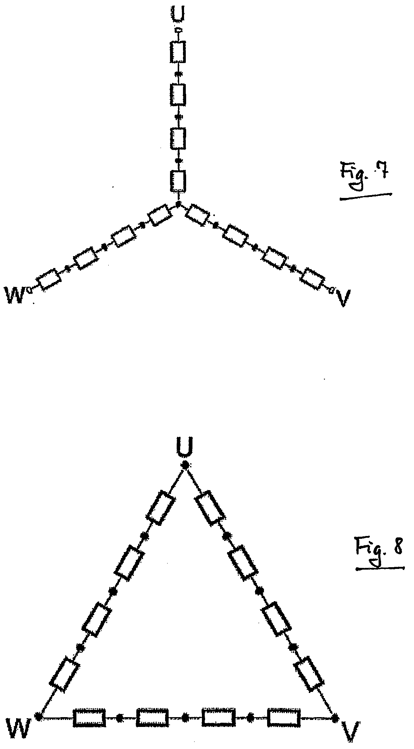

Fig. 7 und 8 zeigen Schaltbilder von Wicklungen des erfindungsgemäßen Permanentmagnet-Synchronmotors, wobei sowohl eine übliche Sternschaltung nach Fig. 7 als auch eine Dreieckschaltung nach Fig. 8 möglich ist. Die Dreieckschaltung bietet hier den Vorteil, dass nur drei Anschlüsse U, V, W erforderlich sind, den ein Sternanschluss bzw. eine Sternverbindung der Sternschaltung entfällt.

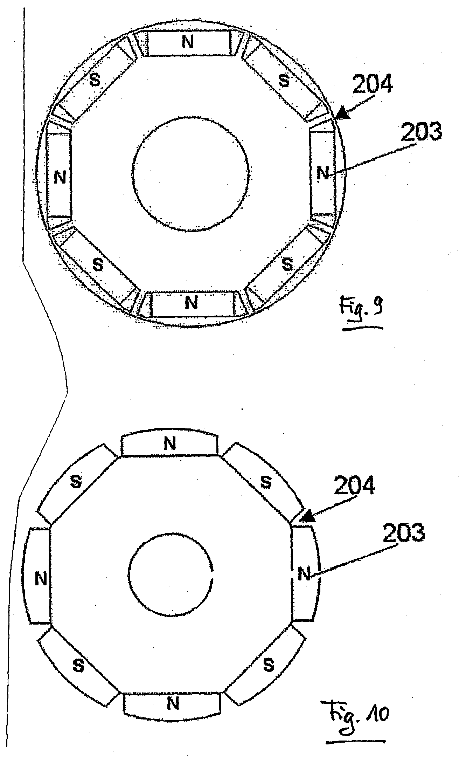

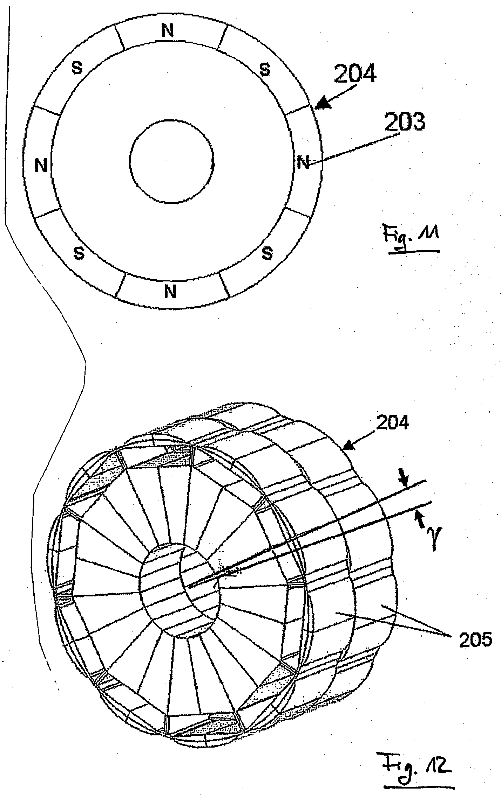

Die Fig. 9 - 11 illustrieren schematische Draufsichten auf drei Ausführungsbeispiele eines Rotors 204 des erfindungsgemäßen Permanentmagnet-Synchronmotors nach Fig. 3. Fig. 9 zeigt am Umfang des Rotors 204 in Taschen angeordnete Permanentmagneten 203 mit unterschiedlicher Polung N, S in Axialrichtung des Rotors 204. Fig. 10 illustriert eine Anordnung der Permanentmageneten 203 auf der äußeren Umfangsfläche des Rotors 204, und Fig. 11 zeigt Ringmagneten auf der äußeren Umfangsfläche des Rotors 204.

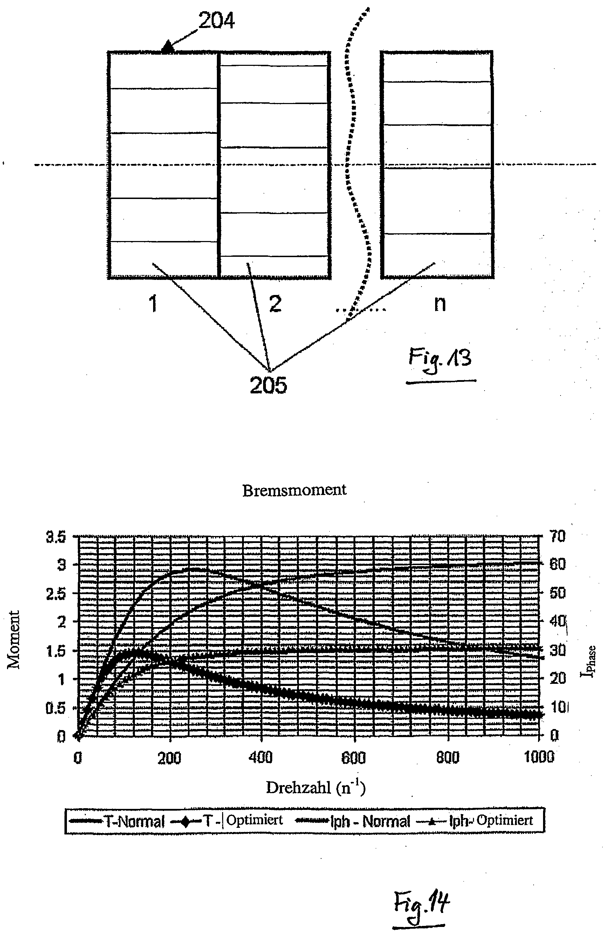

Ein viertes Ausführungsbeispiels des Rotors des erfindungsgemäßen Permanentmagnet-Synchronmotors nach Fig. 3 ist in Fig. 12 in einer schematische perspektivische Ansicht gezeigt. Der Rotor 204 besteht hier aus zwei in Axialrichtung hintereinander angeordneten Rotorpaketen 205, die um einen Versatzwinkel γ, der vorzugsweise die Hälfte der Statornutenanzahl beträgt, um die Axialrichtung zu einander verdreht sind. Bei einer Anzahl von mehr als zwei Rotorpaketen 205, wie Fig. 13 illustriert, liegt der Versatzwinkel y zwischen dem ersten und letzten Rotorpaket 205.

Fig. 14 ist eine grafische Darstellung eines Bremsmomentes des erfindungsgemäßen Permanentmagnet-Synchronmotors nach Fig. 3 im Vergleich zu einem herkömmlichen Permanentmagnet-Synchronmotor über einer Drehzahl. Auf der linken Ordinate sind Momentenwerte und auf der rechten Phasenströmwerte I_{Phase} aufgetragen. Die obere mit dicker Linie gezeigte Kurve ist das normale Bremsmoment eines herkömmlichen Permanentmagnet-Synchronmotors, welches bei einer Drehzahl von 220 n⁻¹ ein Maximum hat, wohingegen ein optimiertes Bremsmoment des erfindungsgemäßen Permanentmagnet-Synchronmotors bei 60 n⁻¹ ein Maximum aufweist, welches um ca. 50% kleiner ist als das des herkömmlichen Permanentmagnet-Synchronmotors. Der normale Phasenstrom I_{Phase} ist als dünne obere Linie aufgetragen, wohingegen der optimierte Phasenstrom I_{Phase} des erfindungsgemäßen Permanentmagnet-Synchronmotors einen Maximalwert annimmt, der ebenfalls um ca. 50% kleiner ist als das des herkömmlichen Permanentmagnet-Synchronmotors. So ist durch diese Versuchsergebnisse zu erkennen, dass der erfindungsgemäße Permanentmagnet-Synchronmotor mit einem geringeren Bremsmoment eine größere Sicherheit zu einem herkömmlichen Motor bietet, indem in einem möglichen Fehlerfall, zum Beispiel bei einer Servolenkung, die Lenkung nicht durch ein zu hohes Bremsmoment blockiert wird. Durch die geringere Stromaufnahme des erfindungsgemäßen Permanentmagnet-Synchronmotors ist ein geringerer Energieverbrauch ermöglicht.

Der Einsatz des erfindungsgemäßen Permanentmagnet-Synchronmotors in einem Servolenksystem eines Kraftfahrzeugs kann sowohl am Lenkgetriebe 101, an der Lenkwelle 102, an dem Ritzel 105 oder auch an anderer Stelle mit entsprechenden Kopplungen erfolgen.

Obgleich die vorliegende Erfindung vorstehend anhand eines bevorzugten Ausführungsbeispiels erläutert wurde, sei sie nicht darauf beschränkt, sondern lässt sich auf beliebige Art und Weise modifizieren, ohne vom Gegenstand der vorliegenden Erfindung abzuweichen.

Insbesondere wäre auch denkbar, dass die Statorzähne 302 in einer dritten Lamellenform Verbindungsbrücken 401 und Unterbrechungen 402 in einer gleichen Lamellenebene aufweisen.

Auch die Anwendung des erfindungsgemäßen Permanentmagnet-Synchronmotors für eine Antriebsvorrichtung in einem Kraftfahrzeug und hier insbesondere für ein Servolenksystem eines Kraftfahrzeuges sei lediglich beispielhaft zu verstehen. Die Erfindung lässt sich vielmehr bei beliebigen elektrischen Antrieben vorteilhaft einsetzen.

Die vorstehend genannten Zahlenangaben sind zwar bevorzugt und bisweilen einer konkreten Anwendung entnommen, jedoch können diese, entsprechend dem fachmännischen Handeln und Wissen, auch mehr oder weniger variiert werden.

### Bezugszeichenliste

- 101: Lenkgetriebe
- 102: Lenkwelle
- 103: Motor
- 104: Steuereinheit
- 105: Ritzel
- 106: Rad
- 107: Spurstange
- 201: Stator
- 202: Statornut
- 203: Permanentmagnet
- 204: Rotor
- 205: Rotorpaket
- 301: Statorjoch
- 302: Statorzahn
- 303: Wicklung
- 304: Isolierung
- 305: Statorstern
- 401: Verbindungsbrücke
- 402: Unterbrechung

- N, S: Magnetpole
- U, V, W: Anschluss
- γ: Versatzwinkel

## Patentansprüche

1. Permanentmagnet-Synchronmotor, insbesondere elektrischer Dreiphasenmotor, mit einem Rotor (204) mit Permanentmagneten (203), mit einem Stator (300) mit Statorjoch (301), in welchem Statorzähne (302) mit dazwischen liegenden Staturnuten (202) angeordnet sind,
- wobei jeweils auf einem Statorzahn (302) zumindest eine Wicklung (303) vorgesehen ist,
- wobei die Statorzähne (302) als Lamellen in Axialrichtung des Stators (300) geschichtet angeordnet sind und zumindest als zwei unterschiedliche Lamellen ausgebildet sind,
- wobei die Statorzähne (302) in einer ersten Lamelle als ein Statorstern (305) an ihren zum Rotor (204) weisenden Enden untereinander umlaufend mittels jeweils einer Verbindungsbrücke (401) verbunden sind und
- wobei die Statorzähne (302) in einer zweiten Lamelle anstelle der Verbindungsbrücke (401) eine Unterbrechung (402) aufweisen,
- wobei der Rotor (204) zumindest zwei Rotorpakete (205) aufweist, die in der Axialrichtung des Rotors (204) angeordnet sind, wobei die zumindest zwei Rotorpakete (205) um einen Versatzwinkel (γ) untereinander um eine Rotorachse verdreht angeordnet sind,
**dadurch gekennzeichnet, dass**
- der Versatzwinkel (γ) in Winkelgrad kleiner oder gleich der Hälfte der Anzahl der Statornuten (202) ist, wobei der Versatzwinkel (γ) bei mehr als zwei Rotorpaketen (205) zwischen dem ersten und letzten Rotorpaket (205) liegt,
- wobei die Statorzähne (302) als Lamellen in Axialrichtung des Stators (300) in der Reihenfolge Statorstern (305) mit Verbindungsbrücken (401) gefolgt von einer, zwei oder drei Lamellen jeweils mit nicht verbundenen Statorzähnen (302) als Einzelzähne angeordnet sind,
- wobei die Lamellen in diesem geschichteten Aufbau in Axialrichtung abwechselnd angeordnet sind,
- wobei
- zwölf Statornuten (202) und vier Rotor-Polpaare oder
- zwölf Statornuten (202) und acht Rotor-Polpaare oder
- zwölf Statornuten (202) und zehn Rotor-Polpaare oder
- zwölf Statornuten (202) und vierzehn Rotor-Polpaare vorgesehen sind.

2. Synchronmotor nach Anspruch 1,
**dadurch gekennzeichnet,**
**dass** zwischen den Wicklungen (303) in den Statornuten (202) jeweils zumindest eine Isolierung (304) vorgesehen ist.

3. Synchronmotor nach einem der vorhergehenden Ansprüche,
**dadurch gekennzeichnet,**
**dass** die Wicklungen (303) in einer Dreiphasen-Sternschaltung oder in einer Dreiphasen-Dreieckschaltung angeordnet sind.

4. Synchronmotor nach einem der vorhergehenden Ansprüche,
**dadurch gekennzeichnet,**
**dass** der Rotor (204) Permanentmagnete (203) in Taschen an seinem Umfang, umfänglich auf seiner Oberfläche oder als Ringmagnete aufweist.

5. Synchronmotor nach einem der vorhergehenden Ansprüche,
**dadurch gekennzeichnet,**
**dass** eine Anzahl n von Rotorpaketen (205) von einer aktiven axialen Länge (Lstk) des Permanentmagnet-Synchronmotors wie folgt abhängig ist:
n = 1 oder 2, wenn Lstk ≤ 40mm
n = 2 oder 3, wenn 40 ≤ Lstk ≤ 60mm
n = 3 oder 4, wenn 60 ≤ Lstk ≤ 80mm
n = 4, wenn 80 ≤ Lstk ≤ 130mm

6. Elektrische Servolenkung eines Kraftfahrzeuges,
welche einen Permanentmagnet-Synchronmotor nach einem der vorhergehenden Ansprüche aufweist.

## Claims

1. Permanent magnet synchronous motor, in particular an electric three-phase motor, having a rotor (204) having permanent magnets (203), having a stator (300) having a stator yoke (301) and stator teeth (302) having stator grooves (202) that lie in between said stator teeth are arranged in said stator yoke,
- wherein in each case at least one winding (303) is provided on a stator tooth (302),
- wherein the stator teeth (302) are arranged layered as lamellae in the axial direction of the stator (300) and are embodied at least as two different lamellae,
- wherein the stator teeth (302) in a first lamella are connected to one another in a circumferential manner as a stator star (305) on their ends that point towards the rotor (204) by means of in each case a connecting bridge (401) and
- wherein the stator teeth (302) in a second lamella comprise an interruption (402) in lieu of the connecting bridge (401),
- wherein the rotor (204) comprises at least two rotor stacks (205) that are arranged in the axial direction of the rotor (204), wherein the at least two rotor stacks (205) are arranged rotated by an offset angle (γ) with respect to one another about a rotational axis,
**characterized in that**
- the offset angle (γ) is in the angular degree less than or equal to half the number of stator grooves (202), wherein the offset angle (γ) is greater than two rotor stacks (205) between the first and last rotor stack (205),
- wherein the stator teeth (302) are arranged as lamellae in the axial direction of the stator (300) in the sequence stator star (305) having connecting bridges (401) followed by one, two or three lamellae in each case having non-connected stator teeth (302) as individual teeth,
- wherein the lamellae are arranged in this layered construction in the axial direction in an alternating manner,
- wherein
- twelve stator grooves (202) and four rotor pole pairs or
- twelve stator grooves (202) and eight rotor pole pairs or
- twelve stator grooves (202) and ten rotor pole pairs or
- twelve stator grooves (202) and fourteen rotor pole pairs are provided.

2. Synchronous motor as claimed in claim 1,
**characterized in that**
in each case at least one insulation (304) is provided between the windings (303) in the stator grooves (202).

3. Synchronous motor as claimed in any one of the preceding claims,
**characterized in that**
the windings (303) are arranged in a three-phase star connection or in a three-phase delta connection.

4. Synchronous as claimed in any one of the preceding claims,
**characterized in that**
the rotor (204) comprises permanent magnets (203) in pockets on its circumference, arranged circumferentially on its surface or as ring magnets.

5. Synchronous as claimed in any one of the preceding claims,
**characterized in that**
a number n of rotor stacks (205) is dependent upon an active axial length (Lstk) of the permanent magnet synchronous motor as follows:
n = 1 or 2, if Lstk ≤ 40mm
n = 2 or 3, if 40 ≤ Lstk ≤ 60mm
n = 3 or 4, if 60 ≤ Lstk ≤ 80mm
n = 4, if 80 ≤ Lstk ≤ 130mm

6. Electric power steering arrangement of a motor vehicle that comprises a permanent magnet synchronous motor as claimed in any one of the preceding claims.

## Revendications

1. Moteur synchrone à aimants permanents, en particulier moteur électrique triphasé, comportant un rotor (204) doté d'aimants permanents (203), comportant un stator (300) doté d'une culasse de stator (301), dans laquelle des dents de stator (302) sont disposées avec des encoches de stator (202) entre elles,
- au moins un enroulement (303) étant prévu respectivement sur une dent de stator (302),
- les dents de stator (302) étant disposées empilées sous forme de lamelles dans la direction axiale du stator (300) et se présentant sous la forme d'au moins deux lamelles différentes,
- les dents de stator (302) d'une première lamelle étant reliées entre elles de manière périphérique au niveau de leurs extrémités tournées vers le rotor (204) au moyen respectivement d'un pont de liaison (401) pour former une étoile statorique (305) et
- les dents de stator (302) d'une deuxième lamelle présentant une interruption (402) au lieu du pont de liaison (401),
- le rotor (204) présentant au moins deux paquets de tôles de rotor (205), qui sont disposés dans la direction axiale du rotor (204), les au moins deux paquets de tôles de rotor (205) étant disposés en décalage angulaire l'un par rapport à l'autre sur un axe de rotor selon un angle de décalage (γ), **caractérisé en ce que**
- l'angle de décalage (γ) est, en degrés d'angle, inférieur ou égal à la moitié du nombre d'encoches de stator (202), l'angle de décalage (γ) se trouvant entre le premier et le dernier paquet de tôles de rotor (205) s'il y a plus de deux paquets de tôles de rotor (205),
- les dents de stator (302) étant disposées sous la forme de lamelles dans la direction axiale du stator (300) dans l'ordre : étoile statorique (305) avec ponts de liaison (401), suivie d'une, deux ou trois lamelles respectivement dotées de dents de stator (302) non reliées en tant que dents individuelles,
- les lamelles étant disposées, dans cette construction empilée, en alternance dans la direction axiale,
- dans lequel
- douze encoches de stator (202) et quatre paires de pôles de rotor ou
- douze encoches de stator (202) et huit paires de pôles de rotor ou
- douze encoches de stator (202) et dix paires de pôles de rotor ou
- douze encoches de stator (202) et quatorze paires de pôles de rotor sont prévues.

2. Moteur synchrone selon la revendication 1,
**caractérisé en ce que**
au moins une isolation (304) est prévue entre les enroulements (303) dans les encoches de stator (202).

3. Moteur synchrone selon l'une des revendications précédentes,
**caractérisé en ce que**
les enroulements (303) sont disposés en un couplage triphasé en étoile ou en un couplage triphasé en triangle.

4. Moteur synchrone selon l'une des revendications précédentes,
**caractérisé en ce que**
le rotor (204) présente des aimants permanents (203) dans des poches sur sa périphérie, sur sa surface de manière périphérique ou sous la forme d'aimants toriques.

5. Moteur synchrone selon l'une des revendications précédentes,
**caractérisé en ce que**
un nombre n de paquets de tôles de rotor (205) dépend d'une longueur axiale active (Lstk) du moteur synchrone à aimants permanents comme suit :
n = 1 ou 2, lorsque Lstk ≤ 40 mm
n = 2 ou 3, lorsque 40 ≤ Lstk ≤ 60 mm
n = 3 ou 4, lorsque 60 ≤ Lstk ≤ 80 mm
n = 4, lorsque 80 ≤ Lstk ≤ 130 mm

6. Servodirection électrique de véhicule à moteur,
qui présente un moteur synchrone à aimants permanents selon l'une des revendications précédentes.
